# EUROPEAN PATENT APPLICATION

(11) **EP 2 551 012 A1**
(43) Date of publication of application: **30.01.2013**
(21) Application number: 10848181.3
(22) Date of filing: 24.03.2010
(51) Int. Cl.: B01J 19/00

(54) **CONTINUOUS REACTION SYSTEM COMPRISING SUBCRITICAL OR SUPERCRITICAL LIQUID AS SOLVENT AND REACTANT AS SOLID**

(71) Applicant: China Fuel (Huaibei) Bioenergy Technology Development Co., Ltd, Anhui 235000 (CN); Sun Pharmaceuticals, Inc., San Diego, CA 92128 (US)
(72) Inventor: ZHU, Zuolin, San Diego, California 92128 (US); SUN, Meg M., San Diego, California 92128 (US); SU, Chungao, Huaibei Anhui 235000 (CN); GU, Kangfu, Huaibei Anhui 235000 (CN); ZHAO, Hongmei, Huaibei Anhui 235000 (CN); MA, Xuemei, Huaibei Anhui 235000 (CN); YU, Weiguo, Huaibei Anhui 235000 (CN); LIU, Daochuang, Huaibei Anhui 235000 (CN); ZHU, Zuodong, Huaibei Anhui 235000 (CN); YE, Hongping, Huaibei Anhui 235000 (CN)
(74) Representative: Biggi, Cristina
(86) International application number: PCT/CN2010/071251
(87) International publication number: WO 2011/116519

(57) **Abstract**

The invention provides a continuous reaction system, and more particularly relates to a continuous reaction system comprising subcritical and/or supercritical liquid as solvent and a reactant as solid. The invention can prevent cavitation in the reaction system effectively, and realize maximum conversion of the solid reactant material.

## Description

### Technical Field

The invention relates to a continuous reaction system, more particularly to a continuous reaction system comprising subcritical and/or supercritical liquids as solvent and a reactant as solid.

### Background Art

Along with the continuing discovery of the advantages of subcritical and supercritical liquids in chemical reaction and substance separation, importance has been attached to the industrial production and relevant production processes using subcritical and supercritical liquids as medium, and a series of related reaction systems and equipments have been invented and used. However, no continuous reaction system comprising critical liquid as solvent and a reactant or part of the reactant as solid has yet been realized in industry or reported in literature. Such a reaction system may be used for extraction of special components from coal or direct liquefaction of coal via subcritical and/or supercritical solvents; component separation, pretreatment, direct liquefaction and solvolysis (e.g. hydrolyzation) of cellulosic biomass in various subcritical and/or supercritical solvents; and extraction of elements and/or salts via subcritical and/or supercritical solvents.

Due to the far higher temperatures of subcritical and supercritical liquids than their boiling points under ambient pressure, slight fluctuation of conditions during production will result in gasification, leading to significant increase of energy consumption in the course of reaction. Furthermore, production cost will be increased grievously due to the cost of degasification of solvent in the process of industrial production. In addition, the gas dissolved in solvent will leave the liquid substantially completely and go into gas state when the reaction temperature of a subcritical or supercritical liquid is achieved, which will incur cavitation in the production process and result in fluctuating stability of the reaction system.

Therefore, an urgent exists in the art for a totally new continuous reaction system comprising a subcritical or supercritical liquid as solvent and a reactant as solid to overcome the above shortcomings.

### Summary

The invention is intended to provide a totally new continuous reaction system comprising a subcritical or supercritical liquid as solvent and a reactant as solid.

Another object of the invention is to provide a use of the above reaction system.

In a first aspect of the invention, there is provided a continuous reaction system comprising subcritical and/or supercritical liquids as solvent and a reactant as solid, wherein the system includes a reactor 1, a feeding pump 2, a buffer tank 3, a condenser 5 and a gas-liquid separator 6.

The reactor in the reaction system is positioned at an angle of 0-90°, preferably 30-90° relative to a horizontal plane.

In the reaction system, there is a feed port at one end of the reactor, and a discharge port at the other end opposite to the feed port, wherein the feed port is at least 0.1m lower than the discharge port.

In another preferred embodiment, the reactor is preferably a cylinder having an aspect ratio of 3-10:1, preferably 4-6:1.

In the reaction system, the volume of the buffer tank is 2-20 times, preferably 8-15 times that of the preheater.

In the reaction system, the volume of the preheater is 1-10%, preferably 1-5% of that of the reactor.

In another preferred embodiment, the reaction system further includes a backpressure valve 8 for controlling pressure, a mixing kettle 7 and a receiving tank 9, wherein the backpressure valve includes a gas backpressure valve 8A and a liquid backpressure valve 8B.

In another preferred embodiment, there is a separating plate 61 between the inlet and outlet of the gas-liquid separator 6.

In a second aspect of the invention, there is provided a method of carrying out continuous reaction using the above reaction system provided according to the invention, wherein the method includes the steps of:
(1) delivering a reaction mixture via the feeding pump 2 into the buffer tank 3, after which the reaction mixture enters the preheater 4 to be heated;
(2) allowing the preheated reaction mixture to enter the reactor 1 from the feed port to undergo reaction;
(3) allowing the reaction product after reaction to enter the condenser 5 from the discharge port of the reactor to be cooled to below the ambient boiling point of the liquid;
(4) separating the cooled reaction product via the gas-liquid separator 6 into gas and liquid, followed by leaving of the liquid reaction product from the reaction system under ambient or lower pressure;
wherein the reaction mixture comprises subcritical and/or supercritical liquids as solvent and solid reactant.

The invention hereby provides a totally new continuous reaction system comprising a subcritical or supercritical liquid as solvent and a reactant as solid to overcome the shortcomings in prior art.

### Description of Drawings

Fig. 1 shows a continuous reaction system with a vertical reactor.
Fig. 2 shows a continuous reaction system with a horizontal reactor.

### Detailed Description

The object of the invention is to provide a continuous reaction system that can use subcritical and/or supercritical liquids as solvent and a reactant as solid, wherein cavitation of the reaction system resulting from gasification of the liquids and other reasons will not occur.

Another object of the invention is to provide a continuous reaction system comprising subcritical and/or supercritical liquids as solvent and a reactant as solid, wherein the system optimizes the reaction extent with high conversion of solid material.

The continuous reaction system provided according to the invention includes a reactor 1, a feeding pump 2, a buffer tank 3, a preheater 4, a condenser 5 and a gas-liquid separator 6.

The volume of the buffer tank is larger, generally over 2 times, typically 2-20 times larger than that of the preheater. Preferably, the volume of the buffer tank is 8-15 times that of the preheater. The buffer tank per se may also function to regulate the temperature of the material.

The preheater is generally positioned horizontally, and its volume is smaller than 10%, generally 5% of the volume of the reactor. The feeding mode of the reactor is required to be such that material is fed from the bottom and discharged from the top. Our findings in the research are different from the reaction phenomena observed in laboratory tests and pilot tests on kilogram scale. In an overwhelming majority of cases, the solid reactant material is heavier than the subcritical and supercritical liquids. Even comminuted crop straw/stalk, such as wheat straw, is heavier than the critical water system when the temperature is higher than 200°C, resulting in a propensity of these solid materials to sinking to the bottom.

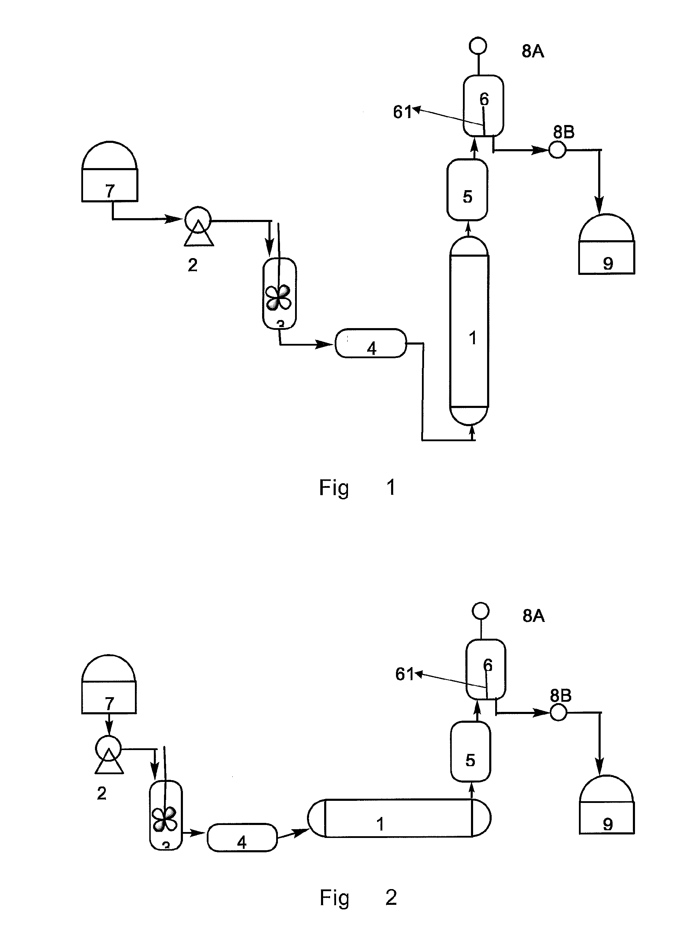

For example, the conversion for feeding from the bottom doubles that for feeding from the top when a continuous reaction system with a vertical reactor as shown in Fig. 1 is used, wherein molybdenum (Mo) or iron (Fe) is used as catalyst, toluene-tetrahydronaphthalene (7:3 v/v) is used as solvent, the reaction temperature is 410°C, the pressure is 10MPa, the particle size of the coal is about 2mm, the solid content in the reaction system is 20%, the weight-space velocity (WHSV) as the feeding rate is 5.4/hour, and the aspect ratio of the reactor is 5:1.

The aspect ratio of the reactor is generally 3:1 or more, for example, 3-10:1. Preferably, the aspect ratio of the reactor is 4-6:1, typically 5:1.

Generally, a separating plate is needed between the liquid inlet and the liquid outlet in the gas-liquid separator to ensure that the discharge from the liquid outlet is liquid in the reaction product.

A filter for filtering solid is generally provided at the discharge port of the reactor. Generally, the filter can not be provided inside the reactor. Otherwise, clogging will occur readily.

The pressure in the reaction system may be controlled by the use of either the gas backpressure valve on the gas-liquid separator or the liquid backpressure valve in the liquid discharging pipeline of the gas-liquid separator. The gas-liquid separator needs an exhaust valve.

When the reactor is positioned at an angle of 0° relative to a horizontal plane, i.e. the reactor shown in Fig. 2, the discharge port of the reactor should be located higher than the discharge port. Alternatively, the inside of the reactor is configured in such a way that the flowing track of the material is elevated gradiently from the feed port. For example, if the discharge end is 10cm lower than the feed end for a 3m³ reactor having an aspect ratio of 5:1, and the feeding rate, namely the weight-space velocity (WHSV), is 5.4/hour (i.e., as commonly used in the art, the weight of the reactant that flows over a unit weight of catalyst per hour, for example, WHSV=5.4 in the case that 540kg reactant flows over 100kg catalyst per hour), the discharge end will be clogged seriously within a week.

In a preferred embodiment of the invention, a continuous reaction system comprising subcritical and/or supercritical liquids as solvent and a reactant as solid is shown in Fig. 1 (vertical reactor) or Fig. 2 (horizontal reactor).

The reaction process carried out using a reaction system shown in the accompanied drawings comprises:
Mixing evenly the subcritical and/or supercritical liquids as solvent and the reaction material in the mixing kettle 7 in Step 1;
Delivering the reaction mixture continuously into the buffer tank 3 using the high-pressure feeding pump 2 in Step 2;
Allowing the reaction mixture to pass through the buffer tank 3 and enter the preheater 4 to be heated preliminarily in Step 3;
Allowing the reaction mixture heated to a predetermined temperature by the preheater 4 to enter the reactor 1 in Step 4;
Feeding the material into the reactor 1 from the bottom and discharging the material from the top in Step 5;
Cooling the reaction mixture after reaction to below the ambient boiling point of the liquid in the condenser 5 in Step 6;
Separating the gas and the liquid in the cooled reaction product mixture through the gas-liquid separator 6 in Step 7; and
Allowing the liquid product to leave the reaction system under ambient or lower pressure in Step 8.

As described above, the drawbacks in the systems known in prior art lead to three main difficulties, namely pressure fluctuation, temperature fluctuation and phase change during reaction. These problems can not be resolved by modification of any single equipment, but rather a whole system is needed. For example, the feeding pump 2 in the reaction system provided according to the invention is a continuous feeding pump connected to the buffer tank 3, so that an approximately ideal constant-rate feeding system can be achieved. In order to exhaust the dissolved gas in the reaction mixture effectively and avoid cavitation caused by gas during reaction (a phenomenon that the gas dissolved in the reactants comes out but can not escape timely from the reactor in which a space occupied by the gas thus appears is called "cavitation caused by gas"), the feed port of the reactor 1 should be lower than the discharge port in the first place. Secondly, the material in the condenser 5 should flow upward all the time. Thirdly, the liquid phase treatment chamber of the gas-liquid separator 6 should be divided into two parts, in which the liquid inlet and outlet are located respectively. Finally, although good pressure control and temperature control can be achieved for high pressure reaction at present, conjunct control over temperature and pressure has neither been reported nor used. However, conjunct control over temperature and pressure is definite in the invention (for example, achieved by connection of the backpressure valve on the gas-liquid separator to the temperature controller on the reactor).

In the reaction system of the invention, solid reactant is selected from mineral and/or cellulosic biomass, wherein the mineral is selected from one or more of coal, various metal ores such as gold ore, rare earth ores and the like, various element ores, etc.; and the cellulosic biomass refers to any cellulose containing biomass, including but not limited to bamboo (including root, stem, leaf), various trees, various crop residues such as wheat straw, etc., with comminuted particles of these substances preferred, wherein the particle size is 0.1-10mm.

The above features mentioned in the invention or those mentioned in the examples may be combined in any way.

The main advantage of the invention is that continuous reaction may be carried out so as to realize production in large scale.

The invention will be further illustrated with reference to the following specific examples. It is to be understood that these examples are merely intended to demonstrate the invention without limiting the scope thereof. The experimental methods in the following examples for which no specific conditions are indicated will be carried out generally under conventional conditions or under those conditions suggested by the manufacturers. Unless otherwise specified, all percentages, ratios, proportions or parts are based on weight.

The unit of weight/volume percentage in the invention is well known to those skilled in the art, for example, referring to the weight of a solute in 100mL solution.

Unless otherwise defined, all special and scientific terms used herein have the same meaning as that familiar to those skilled in the art. In addition, any method and material similar or equivalent to those cited herein may be used in the method of the invention. The preferred implementing methods and materials described herein are intended to be exemplary only.

### Example 1

A continuous reaction system with a vertical reactor as shown in Fig. 1 was used, wherein molybdenum (Mo) or iron (Fe) was used as catalyst, toluene-tetrahydronaphthalene (7:3 v/v) was used as solvent, the reaction temperature was 410°C, the pressure was 10MPa, the particle size of the coal was about 2mm, the solid content in the reaction system was 20%, the weight-space velocity (WHSV) as the feeding rate was 5.4/hour, and the aspect ratio of the reactor was 5:1. The conversion for feeding from the bottom doubles that for feeding from the top.

### Example 2

A continuous reaction system with a vertical reactor as shown in Fig. 1 was used, wherein molybdenum (Mo) or iron (Fe) was used as catalyst, toluene-tetrahydronaphthalene (7:3 v/v) was used as solvent, the reaction temperature was 410°C, the pressure was 10MPa, the particle size of the coal was about 2mm, the solid content in the reaction system was 20%, the weight-space velocity (WHSV) as the feeding rate was 5.4/hour, the aspect ratio of the reactor was 5: 1, and the position of the lower feed port of the gas-liquid separator was lower than the height of the charge port of the reactor. After 9 hours of reaction, the product discharging became discontinuously, indicating occurrence of cavitation caused by gas in the reactor.

### Example 3

A continuous reaction system with a horizontal reactor as shown in Fig. 2 was used to hydrolyze bamboo in a single step, wherein mercury trifluoroacetate was used as catalyst, water was used as solvent, the reaction temperature was 280°C, the pressure was 9MPa, the particle size of the bamboo particles was about 2mm, the solid content in the reaction system was 12%, the weight-space velocity (WHSV) as the feeding rate was 5.4/hour, and the aspect ratio of the reactor was 5:1. The hydrolysis percentage of the bamboo particles was 91%.

### Example 4

A continuous reaction system with a horizontal reactor as shown in Fig. 2 was used to hydrolyze bamboo in a single step, wherein the discharge end was 10cm lower than the feed end, mercury trifluoroacetate was used as catalyst, water was used as solvent, the reaction temperature was 280°C, the pressure was 9MPa, the particle size of the bamboo particles was about 2mm, the solid content in the reaction system was 12%, the weight-space velocity (WHSV) as the feeding rate was 5.4/hour, and the aspect ratio of the reactor was 5:1. The discharge end was clogged seriously within a week.

All of the documents mentioned in the invention are incorporated herein by reference, as if each of them were incorporated herein individually by reference. It is to be further understood that various changes or modifications can be made by those skilled in the art after reading the above teachings of the invention, and these equivalent variations fall in the scope defined by the accompanied claims of the application as well.

## Claims

1. A continuous reaction system comprising subcritical and/or supercritical liquids as solvent and a reactant as solid, wherein the system includes a reactor (1), a feeding pump (2), a buffer tank (3), a condenser (5) and a gas-liquid separator (6).

2. The reaction system of Claim 1, wherein the reactor is positioned at an angle of 0-90° relative to a horizontal plane, preferably at an angle of 30-90° relative to a horizontal plane.

3. The reaction system of Claim 2, wherein there is a feed port at one end of the reactor, and a discharge port at the other end opposite to the feed port, wherein the feed port is at least 0.1m lower than the discharge port.

4. The reaction system of Claim 1, wherein the reactor is preferably a cylinder having an aspect ratio of 3-10:1, preferably 4-6:1.

5. The reaction system of Claim 1, wherein the volume of the buffer tank is 2-20 times, preferably 8-15 times that of the preheater.

6. The reaction system of Claim 1, wherein the volume of the preheater is 1-10%, preferably 1-5% of that of the reactor.

7. The reaction system of Claim 1, wherein the reaction system further includes a backpressure valve (8) for controlling pressure, a mixing kettle (7) and a receiving tank (9), wherein the backpressure valve includes a gas backpressure valve (8A) and a liquid backpressure valve (8B).

8. The reaction system of Claim 1, wherein there is a separating plate (61) between the inlet and outlet of the gas-liquid separator (6).

9. A method of carrying out continuous reaction using the reaction system of Claim 1, wherein the method includes the steps of:
(1) delivering a reaction mixture via the feeding pump (2) into the buffer tank (3), after which the reaction mixture enters the preheater (4) to be heated;
(2) allowing the preheated reaction mixture to enter the reactor (1) from the feed port to undergo reaction;
(3) allowing the reaction product after reaction to enter the condenser (5) from the discharge port of the reactor to be cooled to below the ambient boiling point of the liquid;
(4) separating the cooled reaction product via the gas-liquid separator (6) into gas and liquid, followed by leaving of the liquid reaction product from the reaction system under ambient or lower pressure;
wherein the reaction mixture comprises subcritical and/or supercritical liquids as solvent and solid reactant.
